(19) Europäisches Patentamt
European Patent Office
Office européen des brevets

(11) **EP 4 089 436 B1**

(12) **EUROPÄISCHE PATENTSCHRIFT**

(45) Veröffentlichungstag und Bekanntmachung des Hinweises auf die Patenterteilung:
**03.07.2024 Patentblatt 2024/27**

(21) Anmeldenummer: **21173358.9**

(22) Anmeldetag: **11.05.2021**

(51) Internationale Patentklassifikation (IPC):
**G01S 7/484** *(2006.01)* **G01S 7/481** *(2006.01)*
**G01S 17/89** *(2020.01)*

(52) Gemeinsame Patentklassifikation (CPC):
**G01S 7/4817; G01S 7/4814; G01S 7/4816;**
**G01S 7/484; G01S 17/89**

(54) **VORRICHTUNG ZUR VERMESSUNG EINER UMGEBUNG**

DEVICE FOR MEASURING AN ENVIRONMENT

DISPOSITIF DE MESURE D'UN ENVIRONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.11.2022 Patentblatt 2022/46**

(73) Patentinhaber: **RIEGL Laser Measurement Systems GmbH**
**3580 Horn (AT)**

(72) Erfinder: **RIEGER, Peter**
**3824 Grossau (AT)**

(74) Vertreter: **Weiser & Voith**
**Patentanwälte Partnerschaft**
**Kopfgasse 7**
**1130 Wien (AT)**

(56) Entgegenhaltungen:
**AT-A4- 512 782 DE-A1-102004 050 682**
**US-A- 4 460 240 US-A1- 2008 297 870**
**US-A1- 2010 020 377 US-A1- 2019 310 468**

## Beschreibung

Die vorliegende Erfindung betrifft eine Vorrichtung zur Vermessung einer Umgebung durch Laufzeitmessung eines daran reflektierten Laserstrahls, insbesondere eines gepulsten Laserstrahls, umfassend eine Strahlablenkeinrichtung mit zumindest drei Spiegelfacetten, die um eine zu den Spiegelfacetten nicht-normale Drehachse zur gemeinsamen Drehung drehbar gelagert sind, einen Lasersender zum Aussenden des Laserstrahls über einen ersten Pfad auf jeweils eine der Spiegelfacetten während deren Drehung und einen Laserempfänger zum Empfangen des von der Umgebung reflektierten und über diese Spiegelfacette zurückerhaltenen Laserstrahls.

Vorrichtungen dieser Art sind z.B. in der EP 3 182 159 B1 beschrieben und werden beispielsweise von einem Flugzeug oder Schiff mitgeführt, um Umgebungen wie den Erdboden oder Meeresgrund topographisch zu vermessen. Es ist auch möglich, eine solche Vorrichtung auf einem Landfahrzeug zu montieren, um z.B. Hausfassaden, Straßenschluchten oder Tunnel im Vorbeifahren zu vermessen. Die Vorrichtung kann auch stationär aufgestellt werden, beispielsweise in einem Tag- oder Untertagbergwerk, um dessen Abbau zu vermessen, über einem Förderband, um darauf bewegte Objekte zu vermessen, usw.

Von jeder Spiegelfacette der Strahlablenkeinrichtung wird der gepulste Laserstrahl als Scanfächer über einen Winkelbereich gescannt und tastet so mit jedem Laserimpuls einen anderen Abtastpunkt in der Umgebung ab. Von jedem Abtastpunkt wird der zugehörige Laserimpuls reflektiert und als Empfangsimpuls über dieselbe Spiegelfacette zum Empfänger hin abgelenkt. Aus Laufzeitmessungen der solcherart reflektierten Laserimpulse werden die Entfernungen der Abtastpunkte und daraus - in Kenntnis der Lage der Vorrichtung und der Scanrichtung - ein Punktmodell ("3D-Punktwolke") der Umgebung erstellt.

In herkömmlichen Vorrichtungen können jedoch nicht alle vom Lasersender auf die Strahlablenkeinrichtung ausgesandten Laserimpulse tatsächlich zur Umgebungsvermessung verwendet werden. Zum Einen trifft bei jedem Übergang von einer Spiegelfacette auf die nächste der ausgesandte Laserstrahl nicht mit seinem gesamten Strahlquerschnitt auf der gerade aktiven, für den Scanfächer verwendeten Spiegelfacette auf, d.h. er wird sowohl beim Betreten als auch Verlassen der aktiven Spiegelfacette beschnitten. Dadurch wird zu wenig Sendeleistung ausgesandt, so dass an den Rändern des Scanfächers Punkte in größerer Entfernung nicht vermessen werden können. Außerdem werden, weil der Strahlquerschnitt beim Übergang gleichzeitig auf zwei Spiegelfacetten auftrifft, dort Laserimpulse in zwei unterschiedliche Scanrichtungen ausgesandt, was eine eindeutige Zuordnung zwischen den Empfangsimpulsen und ihren Scanrichtungen unmöglich macht. Auch aus diesem Grund sind die Laserimpulse an den Rändern der Spiegelfacetten "verloren". Dieser Verlust an Laserimpulsen ("Laserschüssen") bedeutet eine geringere Menge an erzeugten Abtastpunkte pro Zeiteinheit und eine ineffiziente Ausnutzung der vorhandenen, konstruktiv kostspieligen Laserleistung.

Zum Anderen ändert sich speziell bei Strahlablenkeinrichtungen mit Spiegelprismen, deren Prismenmantelseiten die Spiegelfacetten bilden, während der Drehung die Ausrichtung der aktiven Spiegelfacette in Bezug auf den Empfangs-Laserstrahl und damit die effektive Empfangsfläche, die zum Umlenken der Empfangsimpulse in den Empfänger zur Verfügung steht ("Kippeffekt") . Insbesondere in den Randbereichen eines Scanfächers kann die aktive Spiegelfacette einen derart ungünstigen Kippwinkel zum Empfangs-Laserstrahl einnehmen, dass die effektive Empfangsfläche für ein nutzbares Empfangssignal nicht mehr ausreicht, d.h. die Empfindlichkeit der Vorrichtung zu gering ist. Auch dadurch gehen wertvolle Laserschüsse verloren; mitunter können nur 60% - 70% aller Laserschüsse für die Vermessung der Umgebung verwendet werden. Zwar könnte ein Lasersender mit höherer Leistung verbaut werden, um das Empfangssignal in den Randbereichen der Scanfächer zu erhöhen, doch ist dies einerseits kostspielig und kann anderseits zur Übersteuerung des Empfängers in den restlichen Bereichen der Scanfächer führen. Überdies kann ein zu starker Lasersender die Augensicherheit des Laserscanners gefährden.

Laserscanner zur Vermeidung einer durch den Beschneidungseffekt hervorgerufenen Abtastlücke sind aus der US 2019/0310468 A1 und der DE 10 2004 050 682 A1 bekannt, wobei ein Laserstrahl mittels einer optischen Weiche abwechselnd auf versetzt rotierenden Spiegelprismen bzw. Spiegelpyramiden gelenkt wird. Diese Laserscanner leiden jedoch an einer aufwändige Ausrichtung der Spiegelprismen, niedrigen Drehzahlen und großem Bauraum.

Die Erfindung setzt sich zum Ziel, die genannten Nachteile des Standes der Technik zu überwinden und eine verbesserte Vorrichtung zur Vermessung einer Umgebung zu schaffen.

Dieses Ziel wird mit einer Vorrichtung der eingangs genannten Art erreicht, wobei zwischen Lasersender und Strahlablenkeinrichtung eine optische Weiche zum getakteten Umschalten des Laserstrahls zwischen dem ersten Pfad und einem auf jeweils eine andere der Spiegelfacetten gerichteten zweiten Pfad angeordnet ist, wobei der Umschalttakt der optischen Weiche mit der Drehung der Spiegelfacetten synchronisiert ist und wobei der Laserempfänger auch zum Empfangen des von der Umgebung reflektierten und über die genannte andere Spiegelfacette zurückerhaltenen Laserstrahls ausgebildet ist. Die Vorrichtung zeichnet sich gemäß der Erfindung dadurch aus, dass die Strahlablenkeinrichtung ein Spiegelprisma aufweist, dessen Prismenachse die Drehachse und dessen Prismenmantelseiten alle Spiegelfacetten der Strahlablenkeinrichtung bilden.

Das Hin- und Herschalten des Laserstrahls zwischen zwei verschiedenen Facetten der Strahlablenkeinrichtung ermöglicht es, den Laserstrahl stets über jenen Pfad auszusenden und zu empfangen, über welchen der Laserstrahl eine günstigere Relativlage zur jeweiligen Spiegelfacette einnimmt. So kann die optische Weiche den Laserstrahl z.B. von einer ungünstigen Spiegelfacette, auf der gerade der Sende-Laserstrahl beschnitten würde und/oder die dem Empfangs-Laserstrahl eine kleinere effektive Empfangsfläche bieten würde, auf eine günstige Spiegelfacette umschalten, auf der gerade der Sende-Laserstrahl mit seinem gesamten Strahlquerschnitt auftrifft und/oder die dem Empfangs-Laserstrahl eine größere effektive Empfangsfläche bietet. Durch die Kopplung des Umschalttaktes der optischen Weiche mit der Drehung der Spiegelfacetten folgt das Umschalten zwischen den Pfaden dabei automatisch und periodisch der Drehung.

Im Ergebnis können so bei Scanvorrichtungen mit mehreren Spiegelfacetten alle Laserimpulse, die der Lasersender aussendet, auch tatsächlich zur Umgebungsvermessung verwendet werden. Keine kostbaren Laserschüsse gehen mehr verloren, und die Anzahl an erzeugten Abtastpunkten pro Zeiteinheit, die Scaneffizienz des Laserscanners, wird signifikant erhöht. Beispielsweise kann bei Laserscannern mit Spiegelprismen die Scanleistung gegenüber herkömmlichen Laserscannern, die an Beschneidungs- und Kippeffekten leiden, um bis zu 50% gesteigert werden, und bei Lasercannern mit Spiegelpyramiden, die nur dem Beschneidungseffekt unterliegen, immer noch um bis zu 20%.

Der Beschneidungseffekt kann in einer bevorzugten Ausführungsform der Erfindung gänzlich vermieden werden, wenn der Strahlquerschnitt des ausgesandten Laserstrahls, die Größe der Spiegelfacetten und die Umschaltzeitpunkte so gewählt sind, dass der Laserstrahl zu jedem Zeitpunkt jeweils mit seinem ganzen Strahlquerschnitt auf der jeweiligen Spiegelfacette auftrifft. Dadurch kann von jeder Spiegelfacette nur der Mittelbereich verwendet werden, um den Strahlquerschnitt des Sende-Laserstrahls von den kritischen Randbereichen der Spiegelfacetten möglichst fern zu halten.

Die Erfindung ermöglicht überdies, mit einem einzigen Lasersender gleich zwei oder mehr Scanfächer auszusenden und so die Einsatzmöglichkeiten von Vorrichtungen mit mehreren Lasersendern zu erzielen. Beispielsweise können die über unterschiedliche Pfade ausgesandten Scanfächer unterschiedliche Winkel mit der Drehachse einschließen, d.h. gegeneinander verkippt sein, um bei fahrzeuggestützten Vorrichtungen die Umgebung unter verschiedenen Blickwinkeln, z.B. unter "Vorwärts-" und "Rückwärtsblick", zu vermessen. Damit können beispielsweise auch Fassaden von Gebäuden beim Überfliegen erfasst oder allgemein Abschattungen vermieden werden. Eine solche Verkippung der Scanfächer kann dabei z.B. entweder durch unterschiedlich auf die Strahlablenkeinrichtung gerichtete Pfade oder durch der Strahlablenkeinrichtung nachgeschaltete Umlenkspiegel erzeugt werden.

Je nach Messanwendung könnte der Laserstrahl in jedem Pfad einen unterschiedlichen Winkelbereich um die Drehachse überstreichen, z.B. um Scanfächer mit unterschiedlicher Orientierung auszusenden und damit unterschiedliche Winkelbereiche der Umgebung zu vermessen. In einer bevorzugten Ausgestaltung der Erfindung überstreicht der von der Strahlablenkeinrichtung abgelenkte Laserstrahl während der Drehung der Spiegelfacetten zwischen jeweils zwei Umschaltzeitpunkten im Wesentlichen denselben Winkelbereich um die Drehachse. Dadurch wird derselbe Winkelbereich von mehreren Scanfächern und somit mit erhöhter Punktdichte vermessen. Speziell bei einer von einem Fahrzeug mitgeführten Vorrichtung können so parallele Scanzeilen, die einen gemeinsamen Scanstreifen vermessen, auf der Umgebung erzeugt werden.

Dabei ist es besonders günstig, wenn die Pfade in einer gemeinsamen Ebene auf die jeweilige Spiegelfacette gerichtet sind. Dies führt dazu, dass die von unterschiedlichen Pfaden erzeugten Scanfächer zusammenfallen und die Vorrichtung in jedem Scanfächer dieselben Scanrichtungen vermisst. Bei einer fahrzeuggestützten Vorrichtung können so bei jeder beliebigen Fahrzeuggeschwindigkeit parallele Scanzeilen mit konstantem Abstand in Bewegungsrichtung auf der Umgebung erzeugt werden. Dadurch wird der gemeinsame Scanstreifen besonders regelmäßig vermessen, was zu einer besonders gleichmäßigen Auflösung der 3D-Punktwolke führt.

Das Prinzip der Erfindung kann mit unterschiedlichsten Strahlablenkeinrichtungen und auf diese gerichteten Pfaden realisiert werden.

Erfindungsgemäß weist die Strahlablenkeinrichtung ein Spiegelprisma auf, dessen Prismenachse die Drehachse und dessen Prismenmantelseiten die Spiegelfacetten bilden. Bei derartigen Spiegelprismen überwindet die Erfindung sowohl den Beschneidungseffekt als auch den Kippeffekt und erzielt eine besonders hohe Effizienz- und Scanleistungssteigerung. Die optische Weiche kann dabei von jeder Spiegelfacette insbesondere jenen Teil (bei zwei Pfaden: jene Hälfte) ihres zur Ablenkung zur Verfügung stehenden Drehwinkelbereichs verwenden, in dem (bzw. der) der Einfallswinkel des Sende-Laserstrahls bezüglich der Spiegelfacettennormalen kleiner als über den restlichen Teil des Drehwinkelbereiches ist, um die effektive Empfangsfläche zu maximieren. Zusätzlich kann dieser Teil jenen Bereich des Drehwinkels auslassen, in dem der Sende-Laserstrahl beschnitten ist, um gleichzeitig die verfügbare Sendeleistung optimal auszunutzen. Optional können dabei die Pfade nicht-normal zur Drehachse auf die Strahlablenkeinrichtung gerichtet sein, damit bei kleinen Einfallswinkeln der Empfänger bzw. seine Empfangsoptik dem Empfangsstrahl nicht im Weg steht und die effektive Empfangsfläche symmetrisch um ihr Maximum verwendet werden kann.

In einer besonders günstigen Variante der Erfindung hat das Spiegelprisma zumindest fünf Spiegelfacetten, wobei zu jedem Umschaltzeitpunkt der erste und der zweite Pfad in Richtung der Drehachse gesehen spiegelsymmetrisch zu einer Symmetrieachse des Spiegelprismas auf das Spiegelprisma gerichtet sind. Dieser symmetrische Aufbau erlaubt es, von jeder ablenkenden Spiegelfacette nur einen eingeschränkten Winkelbereich um deren Mitte zu verwenden und so symmetrische Scanfächer auszusenden, die - bis auf eine vernachlässigbare Parallaxe zwischen den Spiegelfacetten - zusammenfallen und einen gemeinsamen Scanstreifen besonders regelmäßig und mit hoher Auflösung vermessen.

In einer nicht erfindungsgemäßen Ausführungsform weist die Strahlablenkeinrichtung eine Spiegelpyramide auf, deren Pyramidenachse die Drehachse ist und deren dazu geneigte Pyramidenseiten die Spiegelfacetten bilden. Bei derartigen Spiegelpyramiden kann mit Hilfe der Erfindung jedenfalls der Beschneidungseffekt des Sende-Laserstrahls vermieden werden; bei kleindurchmessrigen Laserempfängern, die nicht den gesamten Bewegungsbereich einer passierenden aktiven Spiegelfacette erfassen, kann sogar eine empfängerbedingte Beschneidung des Empfangs-Laserstrahls vermieden werden.

Dabei können der erste und/oder der zweite Pfad beispielsweise parallel zur Drehachse auf die Spiegelpyramide gerichtet sein, normal dazu oder auch in einer Zwischenstellung. In einer bevorzugten Variante dieser Ausführungsform sind der erste und der zweite Pfad zueinander parallel und in gleicher Richtung auf die Spiegelpyramide gerichtet, wobei der Spiegelpyramide für den ersten und den zweiten Pfad jeweils ein Umlenkspiegel zum Umlenken des Laserstrahls in denselben Halbraum der Umgebung nachgeschaltet ist. Dies erlaubt es, mit beiden Pfaden denselben Halbraum der Umgebung zu vermessen.

Werden die Umlenkspiegel und die Auftreffpunkte des Laserstrahls in den beiden Pfaden bezüglich der Drehachse zueinander diametral angeordnet, können zwei parallele, nur um den gegenseitigen Abstand der Auftreffpunkte versetzte Scanfächer ausgesendet werden, um wiederum einen gemeinsamen Scanstreifen besonders regelmäßig zu vermessen. Dabei wird aufgrund der entgegengesetzten Tangentialgeschwindigkeiten an diametralen Punkten der Spiegelpyramide der Scanfächer des ersten Pfades gegengleich zum Scanfächer des zweiten Pfades vom Laserstrahl durchlaufen, was bei einer von einem Fahrzeug mitgeführten Vorrichtung ein Abtastpunkte-Muster mit zueinander gewinkelten Scanzeilen auf der Umgebung ergibt. Mit einem solchen Abtastpunkte-Muster wird ein ungünstiges Zusammenfallen der Scanzeilen eines nachlaufenden Scanfächers, z.B. für den oben genannten Rückwärtsblick, mit den Scanzeilen eines vorlaufenden Scanfächers, z.B. für den Vorwärtsblick, vermieden, weil die Rückwärtsblick-Scanzeilen und die Vorwärtsblick-Scanzeilen zueinander nichtparallel sind.

Insbesondere sind in einer bevorzugten Ausgestaltung dieser Variante, in welcher die Vorrichtung auf einem Fahrzeug, insbesondere auf einem Luftfahrzeug, montiert ist, das eine Nick-, eine Gier- und eine Rollachse hat und für eine Hauptflugrichtung parallel zur Rollachse ausgebildet ist, der erste und der zweite Pfad parallel zur Gierachse auf die Spiegelpyramide gerichtet und die Drehachse ist normal zur Hauptflugrichtung und gegenüber der Gierachse um 1° bis 25°, bevorzugt um 5° bis 15°, verkippt. Dadurch werden einerseits im Abtastpunkte-Muster die Scanzeilen unterschiedlicher Pfade stärker gegeneinander verkippt und so Moiré-Effekte reduziert und die Abtastpunktabstände vergleichmäßigt. Andererseits ist dadurch am einen Scanzeilenrand der Scanfächer des einen Pfades nach vorne und der des anderen Pfades nach hinten geneigt, am anderen Scanzeilenrand umgekehrt, wodurch sich ein Vorwärts- und Rückwärtsblick ergibt. Optional kann der Kippwinkel um die Gierachse von der Bewegungsgeschwindigkeit der Vorrichtung abhängig gesteuert sein, um die genannten Effekte bei jeder Geschwindigkeit zu erzielen.

In einer weiteren Variante mit Spiegelpyramide und parallel auf diese gerichteten Pfaden hat der Empfänger eine Empfangsapertur, die in Richtung der Drehachse gesehen zumindest drei Spiegelfacetten abdeckt. Bedingt durch die parallelen Auftreffrichtungen des Sende-Laserstrahls auf die Spiegelpyramide in beiden Pfaden langen auch die Empfangs-Laserstrahlen in parallelen Richtungen empfängerseitig ein. Dies erlaubt, mit nur einem einzigen großdurchmessrigen Empfänger die Empfangsimpulse aus beiden Pfaden jeweils über die gesamte Fläche der jeweils aktiven Spiegelfacette zu empfangen, unabhängig von der Stellung der Spiegelpyramide. Folglich wird stets ein maximales Empfangssignal gemessen und die Empfangs-Empfindlichkeit der Vorrichtung erhöht.

In einer weiteren nicht erfindungsgemäßen Ausführungsform der Strahlablenkeinrichtung weist diese zwei gleichartige Spiegelprismen auf, deren Prismenachsen die Drehachse und deren Prismenmantelseiten die Spiegelfacetten bilden, wobei die genannte jeweils eine und die genannte jeweils andere Spiegelfacette zu unterschiedlichen Spiegelprismen gehören; oder die Strahlablenkeinrichtung weist zwei gleichartige Spiegelpyramiden auf, deren Pyramidenachsen die Drehachse und deren dazu geneigte Pyramidenseiten die Spiegelfacetten bilden, wobei die genannte jeweils eine und die genannte jeweils andere Spiegelfacette zu unterschiedlichen Spiegelpyramiden gehören. Dadurch ist die Relativlage zwischen den Spiegelfacetten von der Relativlage zwischen den Pfaden entkoppelt. Dieser zusätzliche Freiheitsgrad vereinfacht es, zu jedem Umschaltzeitpunkt eine Spiegelfacette mit einer günstigen Lage bereitzustellen.

Insbesondere können in dieser Ausführungsform der erste und der zweite Pfad zueinander parallel und in gleicher Richtung auf die Spiegelprismen bzw. -pyramiden gerichtet und diese mit gleicher Winkelgeschwindigkeit und einem vorgebbaren gegenseitigen Phasenversatz drehbar sein. Dadurch kann über beide Spiegelprismen bzw. -pyramiden im Wesentlichen derselbe Scanfächer ausgesandt werden, wenn sich der Phasenversatz aus $360° / (J \cdot 2)$ berechnet, wobei $J$ die Anzahl der Spiegelfacetten pro Spiegelprisma bzw. -pyramide ist.

Die Erfindung ist nicht auf das Umschalten zwischen zwei Pfaden beschränkt. In bevorzugten Ausführungsformen ist die optische Weiche dazu ausgebildet, zwischen dem ersten Pfad, dem zweiten Pfad und zumindest einem auf jeweils eine weitere der Spiegelfacetten gerichteten weiteren Pfad umzuschalten, wobei der Laserempfänger auch zum Empfangen des von der Umgebung reflektierten und über die genannte weitere Spiegelfacette zurückerhaltenen Laserstrahls ausgebildet ist. Jede der oben genannten Ausführungsformen und Varianten kann somit auch mit drei, vier, fünf oder mehr Pfaden ausgeführt werden, beispielsweise um ein Drittel, Viertel, Fünftel usw. jeder Spiegelfacette zu verwenden und so die Effizienz der Vorrichtung weiter zu steigern.

Die Erfindung wird nachstehend anhand von in den Zeichnungen dargestellten Ausführungsbeispielen näher erläutert. In den Zeichnungen zeigen:

Fig. 1 eine auf einem Luftfahrzeug montierte Laserscanvorrichtung beim Aussenden eines Scanfächers zur Vermessung einer Umgebung in einer schematischen Perspektivansicht;

Fig. 2 einen Sende- und Empfangskanal der Laserscanvorrichtung von Fig. 1 in einem Blockschaltbild mit schematisch eingezeichneten Strahlengängen;

die Fig. 3a - 3c und 4a - 4c jeweils drei unterschiedliche Stellungen der Strahlablenkeinrichtung der Laserscanvorrichtung von Fig. 1 in Stirnansichten mit zugehörigen Sende- und Empfangs-Laserstrahlen (Fig. 3a - 3c) bzw. Seitenansichten (Fig. 4a - 4c);

Fig. 5 den Verlauf der effektiven Empfangsfläche einer Spiegelfacette der Strahlablenkeinrichtung der Fig. 3a - 3c und 4a - 4c und die daraus resultierende Intensität von Empfangsimpulsen jeweils über dem Einfallswinkel des Empfangs-Laserstrahls auf die Spiegelfacette;

Fig. 6 eine erfindungsgemäße Laserscanvorrichtung mit einer optischen Weiche, welche einen Laserstrahl zwischen einem ersten und einem zweiten Pfad umschaltet, in einem Blockschaltbild mit schematisch eingezeichneten Strahlengängen;

Fig. 7 den Verlauf der effektiven Empfangsfläche für den ersten (oben) und den zweiten (unten) Pfad der Laserscanvorrichtung von Fig. 6, die jeweiligen Umschaltzeitpunkte der optischen Weiche und die daraus resultierende Intensität von Empfangsimpulsen jeweils über dem Drehwinkel der Strahlablenkeinrichtung;

Fig. 8 den Verlauf der effektiven Empfangsfläche für einen ersten (oben), zweiten (mittig) und dritten (unten) Pfad einer alternativen Ausführungsform der Laserscanvorrichtung der Erfindung mit drei Pfaden, die jeweiligen Umschaltzeitpunkte der zwischen diesen drei Pfaden umschaltenden optischen Weiche und die daraus resultierende Intensität von Empfangsimpulsen jeweils über dem Drehwinkel der Strahlablenkeinrichtung;

Fig. 9 eine erste Ausführungsform der Strahlablenkeinrichtung der Laserscanvorrichtung von Fig. 6 in einer schematischen Perspektivansicht;

Fig. 10 eine zweite Ausführungsform der Strahlablenkeinrichtung der Laserscanvorrichtung von Fig. 6 in einer schematischen Perspektivansicht;

die Fig. 11 und 12 zwei verschiedene Varianten einer dritten Ausführungsform der Strahlablenkeinrichtung der Laserscanvorrichtung von Fig. 6 jeweils in einer schematischen Seitenansicht;

Fig. 13 eine beispielhafte Verteilung von Scanzeilen auf einem Ausschnitt der Umgebung, wie sie mit der Laserscanvorrichtung von Fig. 11 oder Fig. 12 erhalten wird, in einer Draufsicht;

die Fig. 14a - 14c ein optionales Verkippen der Strahlablenkeinrichtung von Fig. 12 um eine Rollachse des Luftfahrzeuges von Fig. 1 in einer Draufsicht (Fig. 14a), einer Vorderansicht (Fig. 14b) und einer Seitenansicht (Fig. 14c); und

Fig. 15 eine beispielhafte Verteilung von Scanzeilen auf einem Ausschnitt der Umgebung, wie sie mit der verkippten Laserscanvorrichtung der Fig. 14a - 14c erhalten wird, in einer Draufsicht.

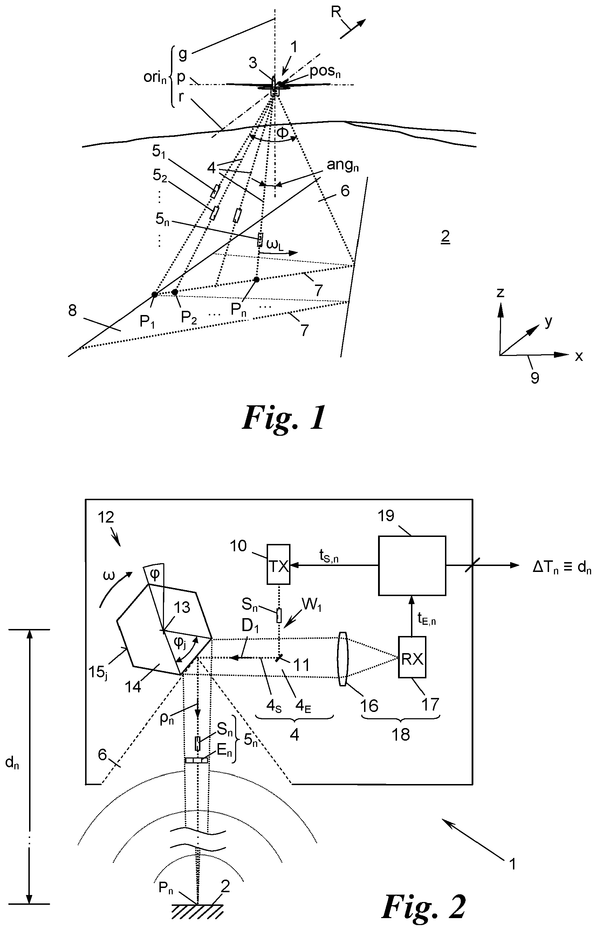

In Fig. 1 ist eine Laserscanvorrichtung 1 zum Vermessen einer Umgebung 2 von einem Fahrzeug 3 aus gezeigt. Die zu vermessende Umgebung 2 kann beispielsweise eine Landschaft (Terrain) sein, aber auch der Straßenboden und die Fassaden entlang eines Straßenzugs, die Innenoberfläche einer Halle, eines Tunnels oder Bergwerks, oder die Meeresoberfläche oder der Meeresboden, usw. Bei dem Fahrzeug 3 kann es sich um ein Land-, Luft- oder Wasserfahrzeug handeln, bemannt oder unbemannt. Alternativ könnte die Vorrichtung 1 auch stationär sein und eine gegenüber der Vorrichtung 1 relativbewegte Umgebung 2 vermessen, z.B. auf einem Förderband bewegte Gegenstände, Werkstücke, etc.

Die Vorrichtung 1 tastet mittels eines Laserstrahls 4 die Umgebung 2 zwecks deren Vermessung ab. Dazu wird der Laserstrahl 4 periodisch über einen Ablenkwinkel $\Phi$ mit einer Winkelgeschwindigkeit $\omega_L$ verschwenkt, wodurch Laserimpulse $5_n$ ($n = 1, 2, 3, ...$) des Laserstrahls 4 bzw. deren Scanrichtungen $\rho_n$ wiederholt einen Scanfächer 6 aufspannen, entlang dessen Schnittlinie 7 mit der Umgebung 2, dessen "Scanzeile", die Laserimpulse $5_n$ die Umgebung 2 an zugehörigen Abtastpunkten $P_n$ abtasten.

Zusätzlich wird die Vorrichtung 1 in Bewegungsrichtung R des Fahrzeugs 3 mit einer Relativgeschwindigkeit v vorwärts bewegt, um die Umgebung 2 mit mehreren aufeinanderfolgenden Scanzeilen 7 in einem Scanstreifen 8 abzutasten. Wenn das Fahrzeug 3 z.B. ein Flugzeug ist, ist die Bewegungsrichtung R die Hauptflugrichtung des Flugzeugs, für die es gebaut ist.

Jeder Laserimpuls $5_n$ wird von der Vorrichtung 1 im Laserstrahl 4 als Sendeimpuls $S_n$ (Fig. 2) zur Umgebung 2 hin ausgesandt, von dieser am jeweiligen Abtastpunkt $P_n$ der Umgebung 2 als Empfangsimpuls $E_n$ auf demselben

Weg zurück zur Vorrichtung 1 reflektiert und von der Vorrichtung 1 empfangen. Der Laserstrahl 4 wird somit einmal als Sende-Laserstrahl $4_S$ mit Sendeimpulsen $S_n$ ausgesandt und als Empfangs-Laserstrahl $4_E$ mit zugehörigen Empfangsimpulsen $E_n$ empfangen. Aus einer Laufzeitmessung der Laserimpulse $5_n$ können Entfernungsmesswerte $d_n$ von der jeweils aktuellen Position $pos_n$ der Vorrichtung 1 zum jeweiligen Abtastpunkt $P_n$ der Umgebung 2 berechnet werden anhand der bekannten Beziehung

$$d_n = c \cdot \Delta T_n / 2 = c \cdot (t_{E,n} - t_{S,n}) / 2 \qquad\qquad (1)$$

mit

$t_{s,n}$ ..... Sendezeitpunkt des Laserimpulses $5_n$,
$t_{E,n}$ ..... Empfangszeitpunkt des Laserimpulses $5_n$ und
$c$ ..... Lichtgeschwindigkeit.

In Kenntnis der jeweiligen Position $pos_n$ der Vorrichtung 1 beim Aussenden des Laserimpulses $5_n$ in einem lokalen oder globalen x/y/z-Koordinatensystem 9 der Umgebung 2, der jeweiligen Orientierung $ori_n$ der Vorrichtung 1 im Koordinatensystem 9, angegeben z.B. durch Kipp-, Roll- und Gierwinkel des Fahrzeugs 3 um seine Kipp-, Roll- und Gierachsen p, r, g, und der jeweiligen Scanrichtung $\rho_n$ des Laserimpulses $5_n$ in Richtung auf den Punk $P_n$ bzgl. des Fahrzeugs 3 kann dann aus dem jeweiligen Entfernungsmesswert $d_n$ die Position des Abtastpunkts $P_n$ im Koordinatensystem 9 berechnet werden. Eine Vielzahl solcherart vermessener und berechneter Abtastpunkte $P_n$ bildet die Umgebung 2, genauer ihre abgetastete Oberfläche, in Form einer "3D-Punktwolke" im Koordinatensystem 9 ab.

Fig. 2 zeigt das Laufzeit-Messprinzip der Vorrichtung 1 in einem Sende/Empfangs-Kanal der Vorrichtung 1, welcher für den in Fig. 1 beispielhaft dargestellten Scanfächer 6 zuständig ist, im Detail. Die Laserimpulse $5_n$ werden von einem Lasersender 10 über einen Sendepfad $W_1$ (hier mit optionalem Umlenkspiegel 11) in einer ersten Auftreffrichtung $D_1$ auf eine Strahlablenkeinrichtung 12 und über diese zur Umgebung 2 hin in die zugehörigen Scanrichtungen $\rho_n$ ausgesandt. Der Lasersender 10 sendet die Laserimpulse $5_n$ fortlaufend periodisch mit einer Impulswiderholrate (pulse repetion rate) PRR aus, welche zur vereinfachten Zuordnung von Sende- und Empfangsimpulsen $S_n$, $E_n$ auch moduliert oder codiert sein kann. Der Lasersender 10 kann jeder im Stand der Technik bekannte Lasersender sein, z.B. ein Gas- oder Festkörperlaser, insbesondere ein Halbleiter- oder Faserlaser. Alternativ könnte für eine Laufzeitmessung und Zuordnung des gesendeten und empfangenen Laserstrahls 4 dieser auch nicht gepulst sein, z.B. moduliert oder kontinuierlich ("continuous wave"), wie im Stand der Technik bekannt.

In Fig. 2 ist die Strahlablenkeinrichtung 12 ein sich um eine Drehachse 13 mit einer Winkelgeschwindigkeit $\omega$ drehendes regelmäßiges Spiegelprisma 14, dessen Prismenachse die Drehachse 13 ist und dessen Mantelseiten jeweils eine Spiegelfacette $15_j$ ($j$ = 1, ..., J; hier J = 6) bilden. Der Scanfächer 6 ist somit im Wesentlichen, d.h. bis auf den vernachlässigbaren Radialabstand des Auftreffpunktes des Sende-Laserstrahles $4_S$ auf der jeweiligen Spiegelfacette $15_j$ von der Drehachse 13, um die Drehachse 13 aufgefächert.

Die aktuelle Winkelstellung des Spiegelprismas 14, die "Phase" der Ablenkeinrichtung 12, ist mit $\varphi$ bezeichnet. Pro "aktiver" Spiegelfacette $15_j$, das ist jeweils jene Spiegelfacette $15_j$, die den Laserstrahl 4 gerade über den zugehörigen Drehwinkelbereich $\varphi_j$ = 360° / J ablenkt, wird somit einmal der über den Ablenkwinkel $\Phi$ aufgespannte Scanfächer 6 überstrichen.

Die Sendeimpulse $S_n$ werden nach der Reflexion am jeweiligen Umgebungspunkt $P_n$ als Empfangsimpulse $E_n$ des Empfangs-Laserstrahles $4_E$ über dieselbe aktive Spiegelfacette $15_j$ zurückerhalten und treffen auf einem z.B. aus einer Fokussieroptik 16 und einem Empfangssensor 17 aufgebauten Laserempfänger 18 auf. Die Sendezeitpunkte $t_{S,n}$ der Laserimpulse $S_n$ und die Empfangszeitpunkte $t_{E,n}$ der umgebungsreflektierten Empfangsimpulse $E_n$ werden einem Entfernungsrechner 19 zugeführt, der daraus anhand der Gleichung (1) die jeweilige Entfernung $d_n$ berechnet.

Der Empfangssensor 17 des Laserempfängers 18 kann jeder im Stand der Technik bekannte Sensor sein, z.B. ein CMOS- oder CCD-Sensor, eine Photodiode, insbesondere eine Avalanche-Photodiode, etc.

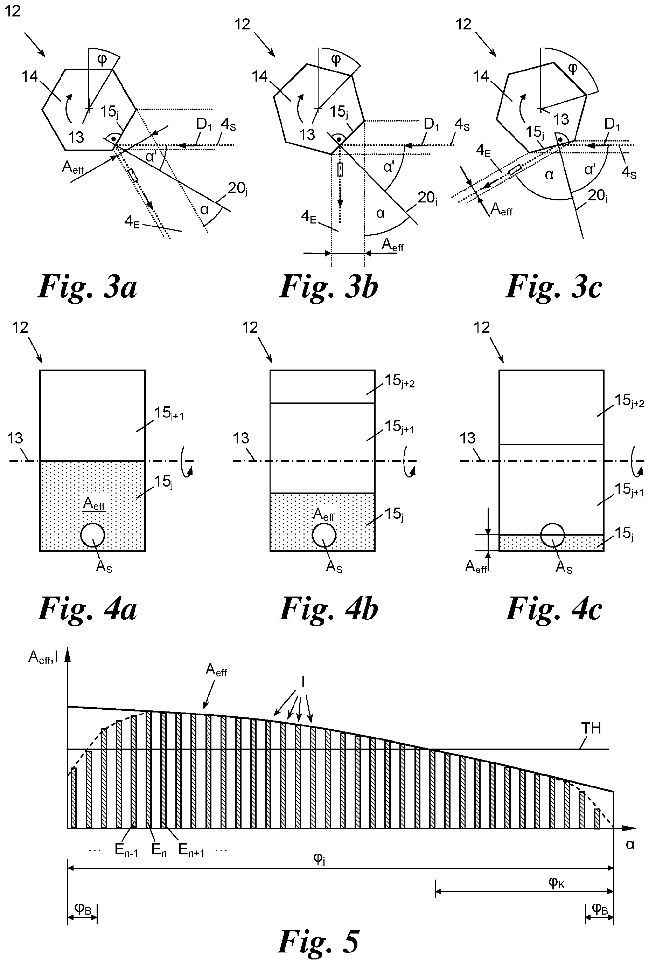

In dem in Fig. 2 beschriebenen Vorrichtungsaufbau können aufgrund zweier, im Folgenden anhand der Fig. 3 - 5 beschriebener Effekte nicht alle vom Lasersender 10 im Wesentlichen ununterbrochen periodisch ausgesandten Laserimpulse $5_n$ zur Umgebungsvermessung verwendet werden.

Der erste Effekt, der zur Nicht-Verwendbarkeit von Laserimpulsen $5_n$ führt, ist der sog. "Kippeffekt", verursacht durch die sich während der Drehung der Strahlablenkeinrichtung 12 ändernde effektive Empfangsfläche $A_{eff}$ der aktiven Spiegelfacette $15_j$, die zum Empfangen von Empfangsimpulsen $E_n$ zur Verfügung steht. Wie in den Fig. 3a - 3c gezeigt, ist die effektive Empfangsfläche $A_{eff}$ vom Einfallswinkel $\alpha$ des Empfangs-Laserstrahls $4_E$ auf die jeweilige Spiegelfacettennormale $20_j$ abhängig, u.zw. gemäß der Beziehung $A_{eff} = A_0 \cdot \cos(\alpha)$, wobei $A_0$ die Fläche der Spiegelfacette $15_j$ ist.

In der Abfolge der Fig. 3a - 3b - 3c bzw. 4a - 4b - 4c dreht sich die Spiegelfacettennormale $20_j$ mit zunehmender Phase $\varphi$ weg von der Auftreffrichtung $D_1$ des Sende-Laserstrahls $4_S$. Dadurch nehmen der Einfallswinkel $\alpha'$ des Sende-

Laserstrahls $4_S$ und der - dazu gleich große - Einfallswinkel $\alpha$ des Empfangs-Laserstrahles $4_S$ auf die aktive Spiegelfacette $15_j$ während der Spiegelfacettendrehung zu und die effektive Empfangsfläche $A_{eff}$ der aktiven Spiegelfacette $15_j$ (in den Fig. 4a - 4c punktiert dargestellt) dementsprechend ab, siehe Fig. 5. Die gemessene Intensität I der Empfangsimpulse $E_n$ ist zur effektiven Empfangsfläche $A_{eff}$ proportional. Der Empfangssensor 17 kann keine beliebig kleinen Intensitäten I erfassen, z.B. weil diese in einem stets vorhandenen Sensorrauschen untergehen, sondern nur solche Intensitäten I, die über einer Detektionsschwelle TH liegen. Wie in Fig. 5 ersichtlich kann bei großen Einfallswinkeln $\alpha$ der Empfangsimpulse $E_n$ - und daher kleinen effektiven Empfangsflächen $A_{eff}$ - die gemessene Intensität I unter die Detektionsschwelle TH abfallen, weshalb die aktive Spiegelfacette $15_j$ für einen Anteil $\varphi_K$ ihres gesendeten "aktiven" Drehwinkelbereiches $\varphi_j$ und damit für die über diesen Anteil $\varphi_K$ ausgesandten Laserimpulse $5_n$ nicht verwendet werden kann.

Der zweite Effekt, der zur Nicht-Verwendbarkeit von Laserimpulsen $5_n$ führt, ist der sog. "Beschneidungseffekt", verursacht durch die nicht-punktförmige Ausdehnung des Strahlquerschnitts $A_S$ des Sende-Laserstrahls $4_s$. Bei jedem Verlassen einer aktiven Spiegelfacette $15_j$ liegt der Strahlquerschnitt $A_S$ schon teilweise auf der nächsten Spiegelfacette $15_{j+1}$ (Fig. 4c) und bei jedem Betreten einer neuen aktiven Spiegelfacette $15_{j+1}$ noch teilweise auf einer vorherigen Spiegelfacette $15_j$, d.h. er wird in jedem Rand-Anteil $\varphi_B$ des Spiegelfacetten-Drehwinkelbereichs $\varphi_j$ "beschnitten".

Dadurch wird einerseits weniger Sendeleistung in die zugehörige Scanrichtung $\rho_n$ ausgesandt und die Intensität I des zugehörigen Empfangsimpulses $E_n$ kann unter die Detektionsschwelle TH abfallen, wie in Fig. 5 anhand der strichlierten Linie dargestellt; andererseits wird dadurch jeder beschnittene Sendeimpuls $S_n$ in zwei unterschiedliche Scanrichtungen $\rho_n$ ausgesandt und als zwei Empfangsimpulse $E_n$ empfangen, die ihren jeweiligen Scanrichtungen $\rho_n$ nicht zugeordnet werden können, so dass auch aus diesem Grund die über die Randbereiche $\varphi_B$ des Drehwinkelbereichs $\varphi_j$ einer Spiegelfacette $15_j$ ausgesandten Laserimpulse $5_n$ nicht verwendet werden können.

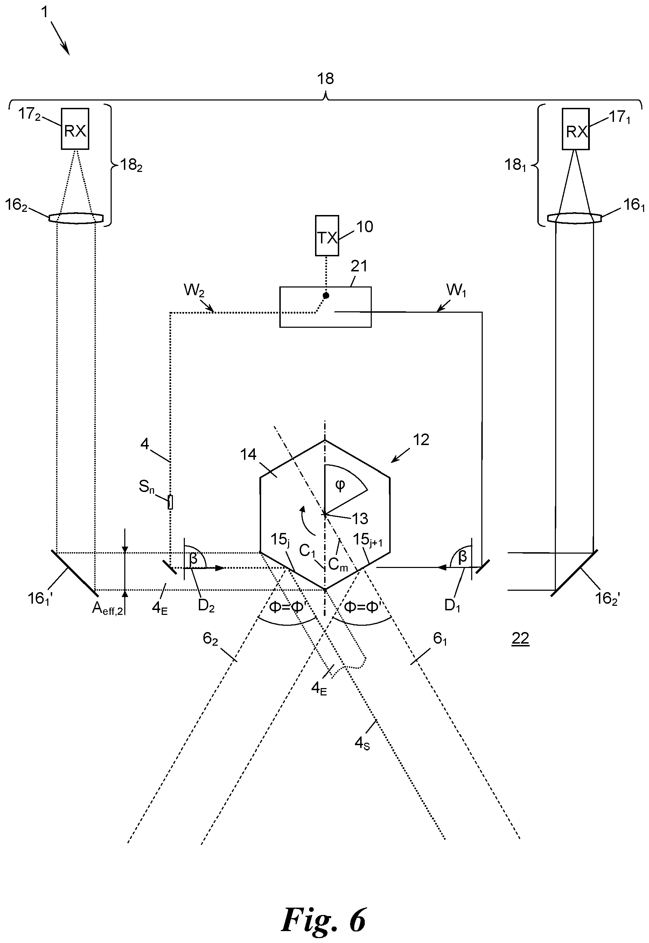

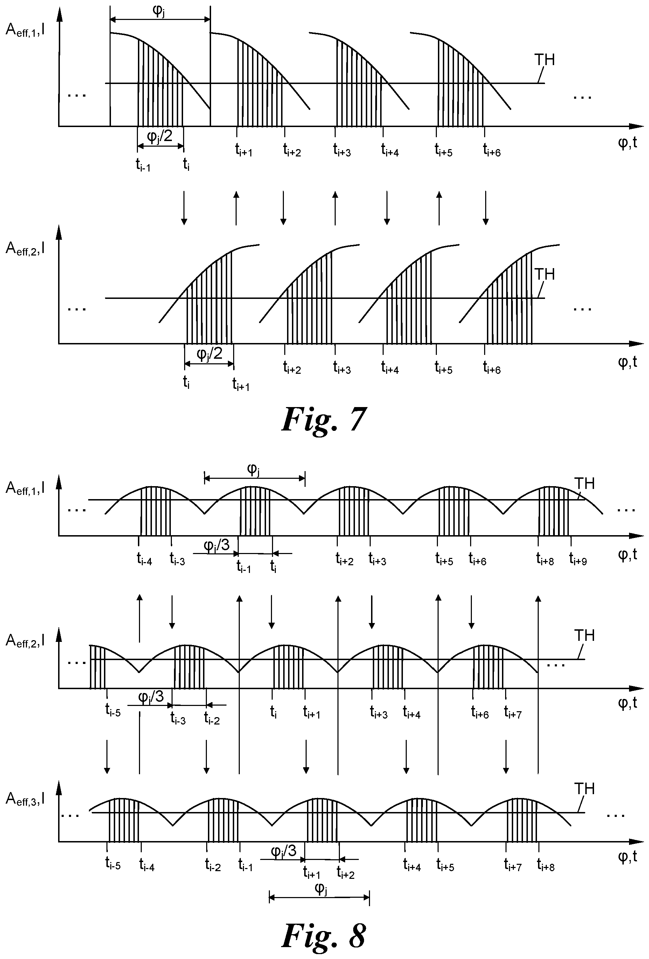

Ein Prinzip zur Vermeidung des Kipp- und/oder Beschneidungseffekts ist in den Fig. 6 und 7 gezeigt. Gemäß Fig. 6 verfügt die erfindungsgemäße Vorrichtung 1 dazu über eine optische Weiche 21, die den Strahlengang des Sende-Laserstrahls $4_S$ zwischen zwei Pfaden $W_1$, $W_2$ umschaltet, u.zw. zwischen dem in den Fig. 2 und 3a - 3c gezeigten ersten Pfad $W_1$ und einem zweiten Pfad $W_2$, der mit seiner Auftreffrichtung $D_2$ auf eine andere Spiegelfacette $15_j$ gerichtet ist. Dadurch wird über jeden Pfad $W_1$, $W_2$ ein zugehöriger Scanfächer $6_1$, $6_2$ ausgesandt.

Der Laserempfänger 18 hat für jeden Pfad $W_1$, $W_2$ einen eigenen Sub-Laserempfänger $18_1$, $18_2$ mit zugehöriger Fokussieroptik $16_1$, $16_2$ und zugehörigem Empfangssensor $17_1$, $17_2$, um den Empfangs-Laserstrahl $4_E$ immer zu empfangen, d.h. sowohl wenn der Sende-Laserstrahl $4_S$ über den ersten Pfad $W_1$ als auch wenn er über den zweiten Pfad $W_2$ ausgesandt wird.

Die optische Weiche 21 schaltet bei vorgegebenen Stellungen der Strahlablenkeinrichtung 12, d.h. gekoppelt mit der Phase $\varphi$ bzw. synchron mit der Drehbewegung und damit in einem regelmäßigen Umschalttakt, zwischen den Pfaden $W_1$, $W_2$ hin und her. Fig. 6 zeigt eine Stellung des Spiegelprismas 14, die zwischen den in den Fig. 3b/4b und 3c/4c gezeigten Stellungen liegt. Bevor das Spiegelprisma 14 nun die in Fig. 3c/4c gezeigte Stellung einnimmt, in welcher der über den ersten (hier: rechten) Pfad $W_1$ ausgesandte Sende-Laserstrahl $4_S$ beschnitten und/oder unter großem Einfallswinkel $\alpha'$ auf die Spiegelfacette $15_{j+1}$ auftreffen würde, schaltet die optische Weiche 21 den Sende-Laserstrahl $4_S$ auf den zweiten (hier: linken) Pfad $W_2$ um, über welchen der ausgesandte Sende-Laserstrahl $4_S$ nicht beschnitten und/oder unter kleinerem Einfallswinkel $\alpha'$ auf Spiegelfacette $15_j$ auftrifft. Wenn bei weiterer Drehung der Strahlablenkeinrichtung 12 dann der über den zweiten Pfad $W_2$ ausgesandte Laserstrahl $4_S$ - wie in der Stellung des Spiegelprismas 14 in den Fig. 3c/4c - am Beschneidungs- und/oder Kippeffekt leidet, schaltet die optische Weiche 21 wieder zurück auf den ersten Pfad $W_1$, usw. usf., immer mit der Phase $\varphi$ gekoppelt in diesem Umschalttakt.

Die optische Weiche 21 kann jedes im Stand der Technik bekannte optische Element zum selektiven Umschalten des Strahlganges sein, z.B. ein um eine Achse rotierendes Spiegelrad mit mehreren, den Strahl in unterschiedliche Richtungen ablenkenden Spiegel-Sektoren, ein Kippspiegel, eine verstellbare optische Faser, usw.

Zur Vermeidung des Beschneidungseffektes sind die Fläche $A_0$ jeder Spiegelfacette $15_j$, die Umschaltzeitpunkte $t_i$ (i = 1, 2, ..., siehe Fig. 7) und der Strahlquerschnitt $A_S$ des Laserstrahls 4 so gewählt, dass der Laserstrahl 4 über alle Phasen $\varphi$ und somit zu jedem Zeitpunkt t mit seinem ganzen Strahlquerschnitt $A_S$ auf der jeweiligen Spiegelfacette $15_j$ auftrifft.

Zur Vermeidung des Kippeffekts schaltet die optische Weiche 21 gemäß Fig. 7 auf jede Spiegelfacette $15_j$ für eine solche Hälfte $\varphi_j/2$ ihres Drehwinkelbereichs $\varphi_j$, in der kleine effektive Empfangsflächen $A_{eff}$, die zu Intensitäten I unterhalb der Detektionsschwelle TH führen würden, nicht auftreten.

Um diese Hälfte $\varphi_j/2$ in der Mitte des Drehwinkelbereichs $\varphi_j$ einer Spiegelfacette $15_j$ und damit von dessen Randbereichen $\varphi_B$ möglichst fern zu halten, sind zu jedem Umschaltzeitpunkt $t_i$ die Auftreffrichtungen $D_1$, $D_2$ der Pfade $W_1$, $W_2$ zu einer Symmetrieachse $C_m$ des Spiegelprismas 14 (m = 1, 2, ..., M) spiegelsymmetrisch angeordnet und zu jedem Umschaltzeitpunkt $t_i$ abwechselnd auf das in Drehrichtung vordere bzw. hintere Viertel ihrer Spiegelfacette $15_j$ gerichtet.

Gemäß Fig. 6, die die Erfindung bestens verdeutlicht, fallen die Scanfächer $6_1$, $6_2$ in Richtung der Drehachse 13 gesehen im Wesentlichen (abgesehen von einem vernachlässigbaren, eine Parallaxe der Scanfächer $6_1$, $6_2$ bewirkenden Versatz zwischen den Spiegelfacetten $15_j$) zusammen, da der Sende-Laserstrahl $4_S$ mit jeder aktiven Spiegel-

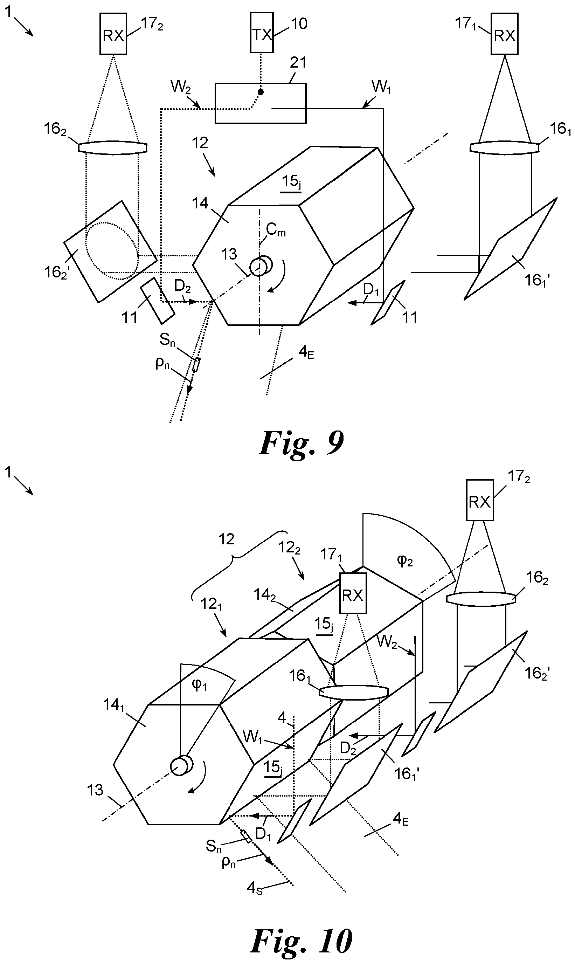

facette $15_j$ - also zwischen jeweils zwei Umschaltzeitpunkten $t_i$ - denselben Winkelbereich $\Phi'$ um die Drehachse 13 überstreicht. Dadurch werden parallele Scanfächer $6_1$, $6_2$ ausgesandt, die einen gemeinsamen Scanstreifen 8 vermessen. Im Falle des sechsfacettigen Spiegelprismas 14 aus den Fig. 6 und 9 sind dazu die Auftreffrichtungen $D_1$, $D_2$ in Richtung der Drehachse 13 gesehen zu jedem Umschaltzeitpunkt $t_i$ normal auf die jeweiligen Symmetrieachsen $C_m$ gerichtet. Bei einem regelmäßigen Spiegelprisma 14 mit J (J > 4) Spiegelfacetten $15_j$ kann dazu der Winkel $\beta$ zwischen jeder Auftreffrichtung $D_1$, $D_2$ und der jeweiligen Symmetrieachse $C_m$ durch $\beta = \varphi_j \cdot 3/2 = 360° \cdot 3/(2 \cdot J)$ gegeben sein.

Damit die Scanfächer $6_1$, $6_2$ im Wesentlichen (bis auf die genannte vernachlässigbare Parallaxe) zusammenfallen und den gemeinsamen Scanstreifen 8 mit in Flugrichtung R äquidistanten Scanzeilen 7 abtasten, liegen zusätzlich die Auftreffrichtungen $D_1$, $D_2$ in einer gemeinsamen Ebene 22.

In Fig. 6 liegt die gemeinsame Ebene 22 normal zur Drehachse 13 in der Zeichnungsebene. Um den Kippeffekt zu minimieren, ist in alternativen Ausführungsformen zumindest eine Auftreffrichtung $D_1$, $D_2$ nicht-normal zur Drehachse 13. Dadurch steht der Laserempfänger 18 bzw. dessen Umlenkspiegel $16_1'$, $16_2'$ bei kleinen Einfallswinkeln $\alpha$ dem Strahlengang des Sende-Laserstrahls $4_S$ bzw. des umgebungsreflektierten Empfangs-Laserstrahls $4_E$ nicht im Weg und es können größere effektive Empfangsflächen $A_{eff}$, die symmetrisch um ihr Maximum liegen, verwendet werden, wie in dem nachfolgenden Beispiel von Fig. 8 mitgezeigt.

Gemäß Fig. 8 kann die optische Weiche 21 zwischen mehr als zwei Pfaden $W_k$ (k = 1, 2, ..., K; hier K = 3), die jeweils auf eine andere Spiegelfacette $15_j$ gerichtet sind, umschalten und der Laserempfänger 18 die darüber ausgesandten Laserimpulse $5_n$ empfangen. Dabei kann nur ein Drittel $\varphi_j/3$ (Fig. 8), ein Viertel $\varphi_j/4$ (nicht gezeigt), ein Fünftel $\varphi_j/5$ (nicht gezeigt) usw. jeder Spiegelfacette $15_j$ verwendet werden, um den Beschneidungseffekt zu verhindern und große effektive Empfangsflächen $A_{eff,1}$, $A_{eff,2}$, $A_{eff,3}$, ... zu verwenden.

In weiteren Ausführungsformen können die Pfade $W_k$ so auf die Strahlablenkeinrichtung 12 gerichtet sein, dass unterschiedliche Scanfächer $6_k$ ausgesandt werden, z.B. mit unterschiedlichen Winkeln zur Drehachse 13 und damit gegeneinander verkippt, um die Umgebung 2 unter verschiedenen Blickwinkeln, z.B. unter Vorwärts- und Rückwärtsblick, zu vermessen; oder mit unterschiedlichen Ablenkwinkeln $\Phi_k$ um die Drehachse 13 und damit gegeneinander verschwenkt, um unterschiedliche Scanstreifen 8 zu vermessen. Ebenso können die Scanfächer $6_k$ unterschiedlich große Ablenkwinkel $\Phi_k$ aufweisen, indem von jeder aktiven Spiegelfacette $15_j$ nicht die Hälfte $\varphi_j/2$, ein Drittel $\varphi_j/3$ usw. ihres Drehwinkelbereichs $\varphi_j$ verwendet wird, oder nichtkontinuierliche Scanfächer $6_k$ vorliegen, indem während des Drehwinkelbereichs $\varphi_j$ mehrmals zwischen einer Spiegelfacette $15_j$ und einer anderen hin und her geschaltet wird. Die optische Weiche 21 könnte beispielsweise immer auf den Pfad $W_k$ mit der gerade größten effektiven Empfangsfläche $A_{eff}$ schalten.

Das hier offenbarte Prinzip kann mit einer Vielzahl an Strahlablenkeinrichtungen 12 und Auftreffrichtungen $D_k$ angewendet werden. Die Fig. 9 - 12 zeigen drei beispielhafte Ausführungsformen der Strahlablenkeinrichtung 12.

Fig. 9 zeigt die bereits beschriebene (erste) erfindungsgemäße Ausführungsform mit einem einzigen drehbaren Spiegelprisma 14. Dabei sind wie gezeigt optional der Lasersender 10 und der Laserempfänger 18 in Richtung der Drehachse 13 voneinander beabstandet, um einander z.B. durch interne Gehäusereflexionen nicht zu stören.

Fig. 10 zeigt eine zweite, nicht die Erfindung repräsentierende Ausführungsform der Strahlablenkeinrichtung 12 mit zwei oder mehr Sub-Strahlablenkeinrichtungen $12_l$ (l = 1, ..., L), hier mit zwei gleichartigen Spiegelprismen $14_1$, $14_2$. Alternativ könnten auch andere Sub-Strahlablenkeinrichtungen $12_1$, z.B. Spiegelpyramiden, vorliegen oder Kombinationen davon.

Die Sub-Strahlablenkeinrichtungen $12_1$, $12_2$, auf die jeweils ein Pfad $W_1$, $W_2$ gerichtet ist, drehen sich um dieselbe Drehachse 13, jedoch mit unterschiedlicher Phase $\varphi_1$, $\varphi_2$. Im gezeigten Fall sind die Auftreffrichtungen $D_1$, $D_2$ parallel und nur in Richtung der Drehachse 13 beabstandet und die Sub-Strahlablenkeinrichtungen $12_1$, $12_2$ drehen sich um eine halbe Spiegelfacette $15_j$ versetzt, d.h. mit einem Phasenversatz $\Delta cp = \varphi_2 - \varphi_1 = 360° / (J \cdot 2)$, woraus die in Fig. 7 dargestellte gemessene Intensität I resultiert. Im Falle mehrerer Sub-Strahlablenkeinrichtungen $12_l$ und Pfade $W_k$ könnte beispielsweise ein Phasenversatz $\Delta\Phi$ von $360° / (J \cdot L)$ gewählt werden, wobei L = K die Anzahl der Sub-Strahlablenkeinrichtung $12_l$ bzw. der umschaltbaren Pfade $W_k$ ist, um ein günstiges K-tel jeder aktiven Spiegelfacette $15_j$ zu verwenden.

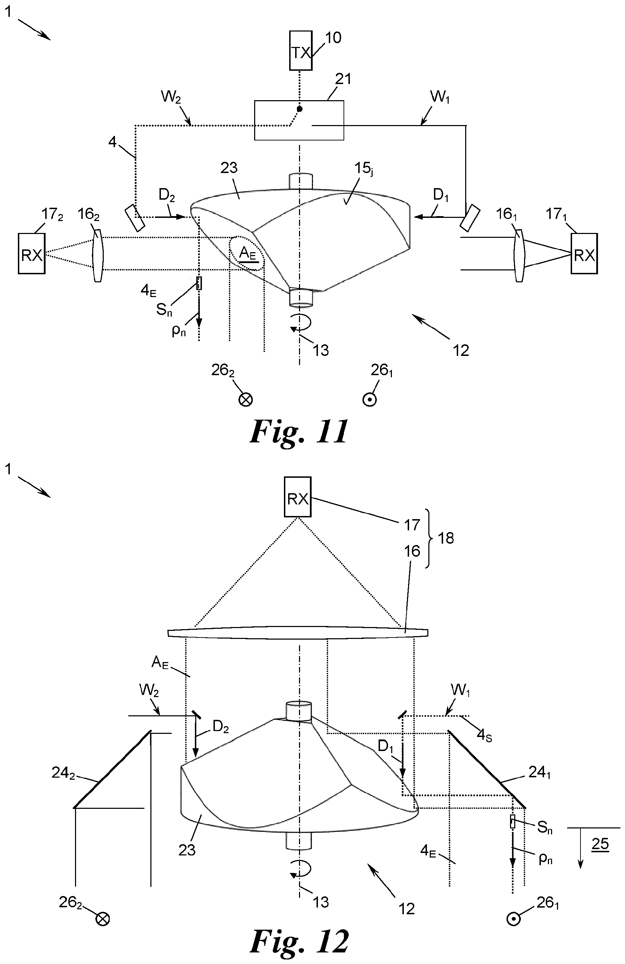

In einer dritten, in den Fig. 11 und 12 dargestellten, nicht die Erfindung präsentierende Ausführungsform ist die Strahlablenkeinrichtung 12 eine regelmäßige Spiegelpyramide 23, deren Pyramidenachse mit der Drehachse 13 zusammenfällt und deren um die Drehachse 13 geneigte Seiten die Spiegelfacetten $15_j$ bilden. In den gezeigten Varianten hat die Spiegelpyramide 23 drei Seiten, in alternativen Varianten mehr.

In einer in Fig. 11 gezeigten Variante dieser Ausführungsform sind die Auftreffrichtungen $D_1$, $D_2$ normal zur Drehachse 13 auf die Spiegelpyramide 23 gerichtet.

In einer in Fig. 12 gezeigten alternativen Variante dieser Ausführungsform sind die Auftreffrichtungen $D_1$, $D_2$ zueinander (hier: auch zur Drehachse 13) parallel und gleich gerichtet und der Strahlablenkeinrichtung 12 ist für jeden Pfad $W_1$, $W_2$ ein Umlenkspiegel $24_1$, $24_2$ nachgeschaltet, der den Sende-Laserstrahl $4_S$ in einen Halbraum 25 unterhalb der Spiegelpyramide 23 ablenkt.

Wie in dieser Ausführungsform gezeigt, kann der Laserempfänger 18 ganz allgemein auch einen gemeinsamen Empfangssensor 17 für mehrere Pfade $W_k$ verwenden. In der gezeigten Variante überdeckt die Empfangsapertur $A_E$

des Laserempfängers 18 in Drehrichtung 13 gesehen zumindest drei Spiegelfacetten $15_j$, wodurch der Empfangssensor 17 die umgebungsreflektierten und zur Drehachse 13 parallel verlaufenden Empfangsimpulse $E_n$ in jeder Stellung der Spiegelpyramide 23 über die gesamte gerade aktive Spiegelfacette $15_j$ empfängt. Im Allgemeinen kann bei K Pfaden $W_k$ die Empfangsapertur $A_E$ des Laserempfängers 18 in Richtung der Drehachse 13 gesehen (K+1) Spiegelfacetten $15_j$ überdecken, um immer über die gesamte gerade aktive Spiegelfacette $15_j$ zu empfangen.

In alternativen Varianten mit kleindurchmessrigem Laserempfänger 18, die nicht die gesamte passierende aktive Spiegelfacette $15_j$ erfassen, kann durch das beschriebene Prinzip neben einer Beschneidung des Sende-Laserstrahls $4_S$ auch eine Beschneidung des Empfangs-Laserstrahls $4_E$ vermieden werden.

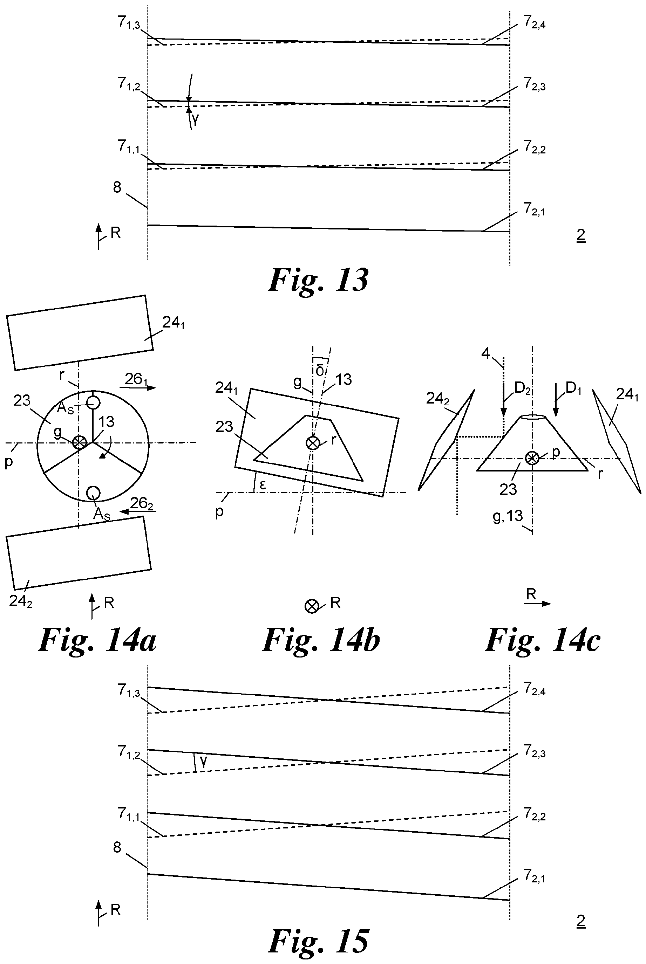

In den Varianten der Fig. 11 und 12 sind die Auftreffrichtungen $D_1$, $D_2$ diametral auf die Spiegelpyramide 23 gerichtet und der Sende-Laserstrahl $4_S$ durchläuft den Scanfächer $6_1$ des ersten Pfades $W_1$ in einer Richtung $26_1$ und den Scanfächer $6_2$ des zweiten Pfades $W_2$ in einer dazu entgegengesetzten Richtung $26_2$. Wenn die Drehachse 13 parallel zur Gierachse g des Fahrzeugs 3 ist, entsteht dadurch auf der Umgebung 2 ein in Fig. 13 gezeigtes Abtastpunktemuster, bei welchem die Scanzeilen $7_1$, $7_2$ unterschiedlicher Scanfächer $6_1$, $6_2$ gegeneinander unter einem Winkel $\gamma$ geneigt sind. Dadurch können von einem in Bewegungsrichtung R gesehen vorderen Scanfächer $6_1$ abgetastete Scanzeilen $7_{1,1}$, $7_{1,2}$, ... nicht mit von einem in Bewegungsrichtung R gesehen hinteren Scanfächer $6_2$ abgetasteten Scanzeilen $7_{2,1}$, $7_{2,2}$, ... zusammenfallen.

Um den Winkel $\gamma$ - wie in Fig. 15 dargestellt - zu vergrößern, ist beispielsweise in der in den Fig. 14a - 14c gezeigten Ausführungsform die Drehachse 13 der Spiegelpyramide 23 um die Rollachse r in einer Ebene normal zur Hauptflugrichtung R um einen Kippwinkel $\delta$ verkippt, während die Auftreffrichtungen $D_1$, $D_2$ parallel zur Gierachse g sind. Dadurch werden die Scanfächer $6_1$, $6_2$ um die Gierachse g verdreht und die Scanzeilen $7_1$, $7_2$ gegeneinander geneigt; zusätzlich gewährt jeder verdrehte Scanfächer $6_1$, $6_2$ am einen Rand seiner Scanzeile 7 einen Vorwärts- und am anderen Rand seiner Scanzeile 7 einen Rückwärtsblick auf die Umgebung 2.

Je nach erwünschter Scanzeilen-Neigung kann der Kippwinkel $\delta$ z.B. zwischen 1° und 25°, bevorzugt zwischen 5° und 15°, sein. Um bei verkippter Drehachse 13 ein Verschieben der Scanzeilen $7_1$, $7_2$ normal zur Bewegungsrichtung R zu vermeiden und sie über denselben Scanstreifen 8 zu führen, sind zusätzlich die Umlenkspiegel $24_1$ und $24_2$ um einen Winkel $\varepsilon$ um die Rollachse r und gegenüber der Nickachse p verkippt. Optional können der Kippwinkel $\delta$ und/oder der Kippwinkel $\varepsilon$ auch mittels eines Aktuators abhängig von der Fahrzeuggeschwindigkeit v automatisch eingestellt werden.

Es versteht sich, dass alternativ in allen Ausführungsformen und Varianten im Strahlengang des Laserstrahls 4 einzelne oder alle der dargestellten Umlenkspiegel 11, $16_1'$, $16_2'$, $24_1$, $24_2$ und Fokussieroptiken 16 entfallen und/oder weitere optische Elemente wie Kollimatoren, Umlenkspiegel, Linsen, Gitter, usw. angeordnet sein können.

**Patentansprüche**

1.  Vorrichtung zur Vermessung einer Umgebung (2) durch Laufzeitmessung eines daran reflektierten Laserstrahls (4), insbesondere eines gepulsten Laserstrahls, umfassend:

    eine Strahlablenkeinrichtung (12) mit zumindest drei Spiegelfacetten ($15_j$), die um eine zu den Spiegelfacetten ($15_j$) nicht-normale Drehachse (13) zur gemeinsamen Drehung drehbar gelagert sind,
    einen Lasersender (10) zum Aussenden des Laserstrahls (4) über einen ersten Pfad ($W_1$) auf jeweils eine der Spiegelfacetten ($15_j$) während deren Drehung, und
    einen Laserempfänger (18) zum Empfangen des von der Umgebung (2) reflektierten und über diese Spiegelfacette ($15_j$) zurückerhaltenen Laserstrahls (4),
    wobei zwischen Lasersender (10) und Strahlablenkeinrichtung (12) eine optische Weiche (21) zum getakteten Umschalten des Laserstrahls (4) zwischen dem ersten Pfad ($W_1$) und einem auf eine jeweils andere der Spiegelfacetten ($15_j$) gerichteten zweiten Pfad ($W_2$) angeordnet ist,
    wobei der Umschalttakt der optischen Weiche (21) mit der Drehung der Spiegelfacetten ($15_j$) synchronisiert ist,
    wobei der Laserempfänger (18) auch zum Empfangen des von der Umgebung (2) reflektierten und über die genannte andere Spiegelfacette ($15_j$) zurückerhaltenen Laserstrahls (4) ausgebildet ist,
    **dadurch gekennzeichnet, dass** die Strahlablenkeinrichtung (12) ein Spiegelprisma (14) aufweist, dessen Prismenachse die Drehachse (13) und dessen Prismenmantelseiten alle Spiegelfacetten ($15_j$) der Strahlablenkeinrichtung (12) bilden.

2.  Vorrichtung nach Anspruch 1, **dadurch gekennzeichnet, dass** der Strahlquerschnitt ($A_S$) des ausgesandten Laserstrahls (4), die Größe ($A_0$) der Spiegelfacetten ($15_j$) und die Umschaltzeitpunkte ($t_i$) so gewählt sind, dass der Laserstrahl (4) zu jedem Zeitpunkt jeweils mit seinem ganzen Strahlquerschnitt ($A_S$) auf der jeweiligen Spiegelfacette ($15_j$) auftrifft.

3. Vorrichtung nach Anspruch 1 oder 2, **dadurch gekennzeichnet, dass** der von der Strahlablenkeinrichtung (12) abgelenkte Laserstrahl (4) während der Drehung der Spiegelfacetten ($15_j$) zwischen jeweils zwei Umschaltzeitpunkten ($t_i$) im Wesentlichen denselben Winkelbereich ($\Phi'$) um die Drehachse (13) überstreicht.

4. Vorrichtung nach einem der Ansprüche 1 bis 3, **dadurch gekennzeichnet, dass** die Pfade ($W_1$, $W_2$) in einer gemeinsamen Ebene (22) auf die jeweilige Spiegelfacette ($15_j$) gerichtet sind.

5. Vorrichtung nach einem der Ansprüche 1 bis 4, **dadurch gekennzeichnet, dass** das Spiegelprisma (14) zumindest fünf Spiegelfacetten ($15_j$) hat, wobei zu jedem Umschaltzeitpunkt ($t_i$) der erste und der zweite Pfad ($W_1$, $W_2$) in Richtung der Drehachse (13) gesehen spiegelsymmetrisch zu einer Symmetrieachse ($C_m$) des Spiegelprismas (14) auf das Spiegelprisma (14) gerichtet sind.

6. Vorrichtung nach einem der Ansprüche 1 bis 5, **dadurch gekennzeichnet, dass** die optische Weiche (21) dazu ausgebildet ist, zwischen dem ersten Pfad ($W_1$), dem zweiten Pfad ($W_2$) und zumindest einem auf jeweils eine weitere der Spiegelfacetten ($15_j$) gerichteten weiteren Pfad ($W_k$) umzuschalten, wobei der Laserempfänger (18) auch zum Empfangen des von der Umgebung (2) reflektierten und über die genannte weitere Spiegelfacette ($15_j$) zurückerhaltenen Laserstrahls (4) ausgebildet ist.

## Claims

1. Device for measuring an environment (2) by means of time of flight measurement of a laser beam (4), in particular a pulsed laser beam, reflected thereon, comprising:

   a beam deflection device (12) with at least three mirror facets ($15_j$) which are rotatably mounted for joint rotation about an axis of rotation (13) that is non-perpendicular to the mirror facets ($15_j$),
   a laser transmitter (10) for transmitting the laser beam (4) via a first path ($W_1$) onto a respective one of the mirror facets ($15_j$) during their rotation, and
   a laser receiver (18) for receiving the laser beam (4) reflected on the environment (2) and received back via this mirror facet ($15_j$),
   wherein an optical switch (21) is arranged between the laser transmitter (10) and the beam deflection device (12) for clocked switching of the laser beam (4) between the first path ($W_1$) and a second path ($W_2$) directed at a respective other one of the mirror facets ($15_j$),
   wherein the switching clock of the optical switch (21) is synchronized with the rotation of the mirror facets ($15_j$),
   wherein the laser receiver (18) is also configured to receive the laser beam (4) reflected on the environment (2) and received back via said other mirror facet ($15_j$),
   **characterized in that** the beam deflection device (12) comprises a mirror prism (14) whose prism axis is the axis of rotation (13) and whose prism side faces form all the mirror facets ($15_j$) of the beam deflection device (12).

2. Device according to claim 1, **characterized in that** the beam cross-section ($A_S$) of the transmitted laser beam (4), the size ($A_0$) of the mirror facets ($15_j$), and the switching times ($t_i$) are chosen such that the laser beam (4) at each point in time respectively impinges on the respective mirror facet ($15_j$) with its entire beam cross-section ($A_S$).

3. Device according to claim 1 or 2, **characterized in that** the laser beam (4) deflected by the beam deflection device (12) during rotation of the mirror facets ($15_j$) sweeps essentially the same angular range ($\Phi'$) around the axis of rotation (13) between two respective switching times ($t_i$).

4. Device according to any one of claims 1 to 3, **characterized in that** the paths ($W_1$, $W_2$) are directed in a common plane (22) towards the respective mirror facet ($15_j$).

5. Device according to any one of claims 1 to 4, **characterized in that** the mirror prism (14) has at least five mirror facets ($15_j$), wherein at each switching time ($t_i$) the first and the second paths ($W_1$, $W_2$) are directed mirror-symmetrically with respect to an axis of symmetry ($C_m$) of the mirror prism (14) towards the mirror prism (14) when seen in the direction of the axis of rotation (13).

6. Device according to any one of claims 1 to 5, **characterized in that** the optical switch (21) is configured to switch between the first path ($W_1$), the second path ($W_2$), and at least one further path ($W_k$) directed at a respective further one of the mirror facets ($15_j$), wherein the laser receiver (18) is also configured to receive the laser beam (4) reflected on the environment (2) and received back via said further mirror facet (15$_j$).

**Revendications**

1. Dispositif de mesure d'un environnement (2) par la mesure du temps de vol d'un faisceau laser (4) s'y réfléchissant, notamment un faisceau laser pulsé, comprenant :

   un dispositif de déviation de faisceau (12) avec au moins trois facettes de miroir (15$_j$) qui sont montées de manière rotative pour une rotation commune autour d'un axe de rotation (13) non-orthogonale par rapport aux facettes de miroir (15$_j$),
   un émetteur laser (10) permettant d'émettre le faisceau laser (4) via un premier chemin (W$_1$) sur respectivement une des facettes de miroir (15$_j$) pendant leur rotation, et
   un récepteur laser (18) permettant de réceptionner le faisceau laser (4) réfléchi par l'environnement (2) et reçu en retour via cette facette de miroir (15$_j$),
   dans lequel un commutateur optique (21) est disposé entre l'émetteur laser (10) et le dispositif de déviation de faisceau (12) pour la commutation cyclique du faisceau laser (4) entre le premier chemin (W$_1$) et un deuxième chemin (W$_2$) orienté respectivement sur une autre des facettes de miroir (15$_j$),
   dans lequel le cycle de commutation du commutateur optique (21) est synchronisé avec la rotation des facettes de miroir (15$_j$),
   dans lequel le récepteur laser (18) est également conçu pour la réception du faisceau laser (4) réfléchi par l'environnement (2) et reçu en retour via ladite autre facette de miroir (15$_j$),
   **caractérisé en ce que** le dispositif de déviation de faisceau (12) présente un prisme miroir (14) dont l'axe de prisme forme l'axe de rotation (13) et dont les faces d'enveloppe de prisme forment toutes les facettes de miroir (15$_j$) du dispositif de déviation de faisceau (12).

2. Dispositif selon la revendication 1, **caractérisé en ce que** la section transversale de faisceau (A$_S$) du faisceau laser (4) émis, la taille (A$_0$) des facettes de miroir (15$_j$) et les instants de commutation (t$_i$) sont choisis de telle manière que le faisceau laser (4) tombe à chaque instant respectivement avec sa section transversale de faisceau (A$_S$) complète sur la facette de miroir (15$_j$) respective.

3. Dispositif selon la revendication 1 ou la revendication 2, **caractérisé en ce que** le faisceau laser (4) dévié par le dispositif de déviation de faisceau (12) balaye, pendant la rotation des facettes de miroir (15$_j$), entre respectivement deux instants de commutation (t$_i$), essentiellement la même plage angulaire (Φ') autour de l'axe de rotation (13).

4. Dispositif selon l'une des revendications 1 à 3, **caractérisé en ce que** les chemins (W$_1$, W$_2$) sont orientés dans un plan commun (22) sur la facette de miroir (15$_j$) respective.

5. Dispositif selon l'une des revendications 1 à 4, **caractérisé en ce que** le prisme miroir (14) possède au moins cinq facettes de miroir (15$_j$), où, à chaque instant de commutation (t$_i$), les premier et deuxième chemins (W$_1$, W$_2$) sont orientés symétriquement en miroir par rapport à un axe de symétrie (C$_m$) du prisme miroir (14) sur le prisme en miroir (14), vu dans la direction de l'axe de rotation (13).

6. Dispositif selon l'une des revendications 1 à 5, **caractérisé en ce que** le commutateur optique (21) est conçu pour commuter entre le premier chemin (W$_1$), le deuxième chemin (W$_2$) et au moins un autre chemin (W$_K$) orienté sur respectivement une autre des facettes de miroir (15$_j$), où le récepteur laser (18) est également conçu pour la réception du faisceau laser (4) réfléchi par l'environnement (2) et reçu en retour via ladite autre facette de miroir (15$_j$).

*Fig. 1*

*Fig. 2*

**Fig. 3a**

**Fig. 3b**

**Fig. 3c**

**Fig. 4a**

**Fig. 4b**

**Fig. 4c**

**Fig. 5**

*Fig. 6*

Fig. 7

Fig. 8

15

*Fig. 9*

*Fig. 10*

*Fig. 11*

*Fig. 12*

$7_{1,3}$ $7_{2,4}$

$7_{1,2}$ $7_{2,3}$

γ

$7_{1,1}$ $7_{2,2}$

8 $7_{2,1}$

R 2

## Fig. 13

$24_1$

r $26_1$

23 $A_S$

g 13

p

$A_S$ $26_2$

$24_2$ R

$24_1$ δ 13

g

23 r

ε

p

R

## Fig. 14a

## Fig. 14b

4

$D_2$ $D_1$

$24_2$ $24_1$

p

r

23

g,13

R

## Fig. 14c

$7_{1,3}$ $7_{2,4}$

$7_{1,2}$ γ $7_{2,3}$

$7_{1,1}$ $7_{2,2}$

8 $7_{2,1}$

R 2

## Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3182159 B1
- US 20190310468 A1
- DE 102004050682 A1